# FASCICULE DE BREVET EUROPEEN

(11) **EP 1 291 257 B1**
(45) Date de publication et mention de la délivrance du brevet: **11.08.2004**
(21) Numéro de dépôt: 02020050.7
(22) Date de dépôt: 06.09.2002
(51) Int. Cl.: B60T 8/40, B60T 11/20

(54) **Simulateur de sensation de freinage et installation de freinage hydraulique avec un tel simulateur**
Bremsgefühlsimulator und hydraulische Bremsanlage mit einem solchen Simulator
Brake-feel simulator and braking system comprising such simulator

(30) Priorité: 10.09.2001 FR 0111760
(43) Date de publication de la demande: 12.03.2003
(73) Titulaire: ROBERT BOSCH GmbH, 70469 Stuttgart (DE)
(72) Inventeur: Michon, Jean-Pierre, 77178 Saint Pathus (FR); Verbo, Ulysse, 93600 Aulnay-Sous-Bois (FR)
(74) Mandataire: Hurwic, Aleksander Wiktor

(56) Documents cités:
- WO-A-00/00373
- FR-A- 2 741 312
- FR-A- 2 756 797
- FR-A- 2 772 706
- PATENT ABSTRACTS OF JAPAN vol. 1999, no. 05, 31 mai 1999 (1999-05-31) & JP 11 048950 A (TOYOTA MOTOR CORP), 23 février 1999 (1999-02-23)
- PATENT ABSTRACTS OF JAPAN vol. 2000, no. 09, 13 octobre 2000 (2000-10-13) & JP 2000 159078 A (NISSAN MOTOR CO LTD), 13 juin 2000 (2000-06-13)
- PATENT ABSTRACTS OF JAPAN vol. 2000, no. 13, 5 février 2001 (2001-02-05) & JP 2000 280877 A (TOKICO LTD), 10 octobre 2000 (2000-10-10)

## Description

L'invention est relative à un simulateur de sensation de freinage pour une installation de freinage hydraulique, propre à opposer à l'avance d'un organe de commande manuelle une réaction reflétant le déroulement d'un freinage, du genre de celui qui comporte un corps avec une chambre pour recevoir le liquide sous pression provenant d'un maître cylindre le volume de cette chambre étant variable et délimité par une paroi mobile sollicitée par un moyen de rappel élastique, la chambre ayant un fond en appui contre une butée, ladite paroi mobile étant formée par une membrane déformable.

Un simulateur de ce type est connu d'après WO 0000373.

Du document JP 11048930 est connu un simulateur de sensation de freinage, ce simulateur comprenant un corps avec une chambre pour recevoir le liquide sous pression provenant du maître-cylindre, le volume de cette chambre étant variable et délimité par une paroi mobile sollicitée par un moyen de rappel élastique, la chambre ayant un fond en appui contre une butée, la sensation de freinage étant reproduite par une variation permanente de la butée. Du document WO 0000373, est connu un simulateur de sensation de freinage comportant une membrane déformable sous l'effet du fluide hydraulique sous pression et reproduisant la sensation de freinage.

Une installation de freinage avec un simulateur est connue, par exemple d'après FR-2 772 706.

De tels simulateurs de sensation permettent un transfert du liquide de frein de sorte que l'organe de commande manuelle, par exemple pédale de frein, conserve une course normale d'actionnement, dépendant de la force exercée par le conducteur.

Les simulateurs connus donnent satisfaction et permettent de créer une loi de variation de la force à exercer sur l'organe de commande manuelle, en fonction de la course, qui procure à l'utilisateur une sensation semblable à celle qui serait obtenue si la pression de liquide dans les freins de roue résultait directement de la pression provenant du maître-cylindre et de l'effort musculaire sur la pédale de frein.

Toutefois, avec ces simulateurs connus, la loi de variation de la force à exercer sur l'organe de commande manuelle ne peut être modifiée de manière simple et rapide. Or, des lois de variation différentes sont souvent souhaitées selon le type de conduite, selon le type de voiture, ou selon le constructeur de véhicule. Une telle exigence nécessite, jusqu'à présent, de prévoir différents types de groupes maître-cylindre / simulateur de sensation.

Il est donc souhaitable de pouvoir intervenir de manière simple et rapide sur la loi de variation de la force en fonction de la course, sans qu'il soit nécessaire de prévoir des simulateurs différents.

Par ailleurs, pour un véhicule donné, la sensation de freinage créée par le simulateur peut varier en fonction de la température ambiante, en fonction du temps par suite de l'usure, et en fonction des caractéristiques des divers composants du simulateur. Le niveau de purge du liquide de frein peut également influer sur la sensation procurée .

Il serait avantageux de pouvoir compenser aisément ces fluctuations possibles pour obtenir toujours la même loi de variation en fonction de la course pour un type de voiture déterminé.

L'invention a pour but, surtout, de fournir un simulateur de sensation de freinage qui réponde mieux que jusqu'à présent aux diverses exigences rappelées ci-dessus et qui, notamment, permette de modifier ou corriger rapidement et aisément la loi de variation de la force sur l'organe de commande manuelle en fonction de la course.

L'invention vise notamment à permettre de paramétrer la loi de variation force/course de l'organe de commande manuelle pour chaque type de voiture, et le cas échéant pour chaque conducteur. L'invention vise aussi à permettre de conserver la sensation pédale .

Selon l'invention, un simulateur de sensation de freinage pour véhicule, du genre défini précédemment, est caractérisée par le fait qu'il comporte un moyen pour modifier la position de la butée et pour ainsi modifier la loi de variation de la force en fonction de la course de l'organe de commande manuelle et en ce que ladite butée coopère avec la membrane déformable.

De préférence, le moyen pour modifier la position de la butée est un moyen de déplacement axial de la butée. Ce moyen de déplacement peut comprendre un moteur électrique, en particulier du type pas à pas, qui entraîne un mécanisme de transformation du mouvement circulaire en un mouvement rectiligne de la butée .

Le mécanisme de transformation du mouvement peut comprendre un système vis-écrou, l'écrou étant entraîné en rotation par le moteur qui est maintenu immobile axialement, tandis que la vis peut coulisser axialement mais est empêchée de tourner. En variante, le mécanisme de transformation du mouvement comprend un système pignon-crémaillère, le pignon étant entraîné en rotation par le moteur, et la crémaillère étant liée à la butée.

La chambre du simulateur peut être délimitée par une membrane en matière élastomère, ou équivalent, à paroi cylindrique relativement épaisse avec une coiffe d'extrémité à paroi moins épaisse, déformable suivant la direction axiale, dont le fond est en appui contre la butée.

La présente invention a également pour objet l'installation de freinage hydraulique pour véhicule comportant, pour actionner des freins de roue :
- un système de freinage de service à énergie extérieure ;
- un système de freinage de secours à énergie musculaire ;
- un organe de commande manuelle dont l'avance actionne le système de freinage de service ou, en cas de défaillance de ce dernier, le freinage de secours ;
- un maître-cylindre avec au moins un piston primaire dont le déplacement est assuré par l'organe de commande manuelle ;
- au moins une valve de sécurité permettant soit d'isoler le maître-cylindre des freins de roue lorsque le freinage de service fonctionne normalement, soit, en cas de défaillance du freinage de service, d'utiliser le maître-cylindre pour un freinage de secours ;
- un simulateur de sensation de freinage pour opposer à l'avance de l'organe de commande manuelle, lors d'un freinage de service à énergie extérieure, une réaction reflétant le déroulement du freinage,
caractérisé en ce que le simulateur est un simulateur selon l'une quelconque des revendications 1 à 6.

La présente invention a également pour objet un installation de freinage selon la revendication 7, caractérisée par le fait que le corps du simulateur est disposé avec son axe parallèle à celui du maître-cylindre et est solidaire du corps du maître-cylindre, la communication entre le maître-cylindre et la chambre étant assurée par une canalisation prévue dans le corps, reliée à une gorge annulaire qui communique avec des canaux orientés radialement débouchant dans une ouverture centrale qui communique avec la chambre du simulateur.

L'invention consiste, mises à part les dispositions exposées ci-dessus, en un certain nombre d'autres dispositions dont il sera plus explicitement question ci-après à propos d'un exemple de réalisation décrit en détail avec référence aux dessins ci-annexés, mais qui n'est nullement limitatif. Sur ces dessins :
Fig.1 est une représentation schématique partielle d'une installation de freinage pour véhicule selon l'invention.
Fig.2 est une vue en coupe axiale à plus grande échelle du maître-cylindre et du simulateur.
Fig.3 est une vue en coupe partielle du simulateur dans une position différente de celle de Fig.2.
Fig. 4 est une coupe partielle à grande échelle d'un détail de Fig.2.
Fig.5, enfin, est un diagramme illustrant la variation de la force, portée en ordonnée, à exercer sur la pédale de frein en fonction de la course de cette pédale, portée en abscisse, pour différentes configurations du simulateur.

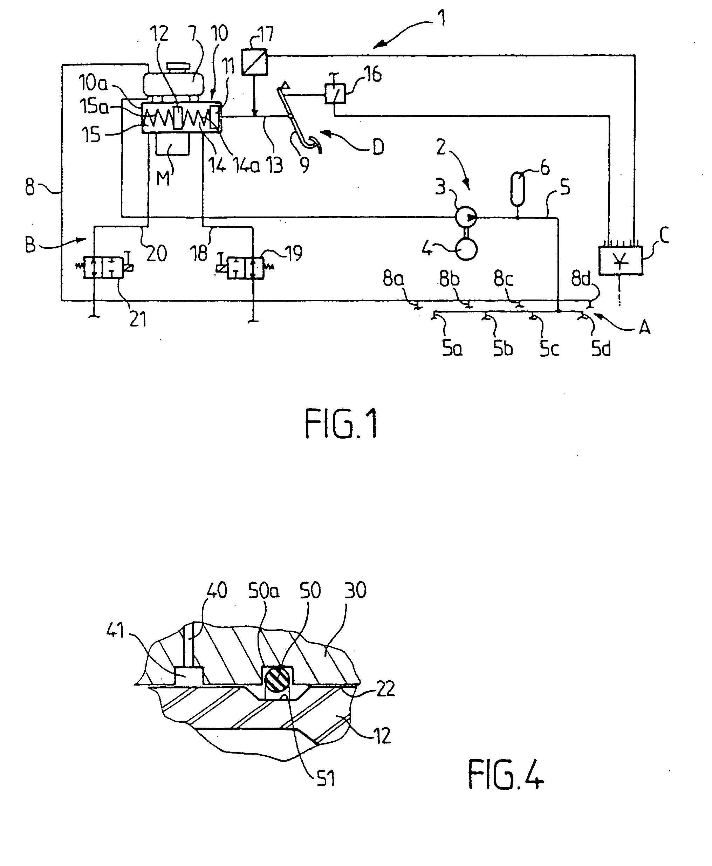

En se reportant à Fig.1, on peut voir une installation 1 de freinage hydraulique pour véhicule automobile comprenant un système de freinage de service A alimenté en liquide sous pression par une centrale hydraulique 2 à énergie extérieure, et un système de freinage de secours B à énergie musculaire. La centrale hydraulique 2 comprend une pompe 3 entraînée par un moteur 4, par exemple un moteur électrique. La pompe 3 fournit du liquide sous pression à une ligne d'alimentation principale 5 sur laquelle est monté un accumulateur oléopneumatique 6. L'aspiration de la pompe 3 est reliée à un réservoir 7 de liquide hors pression, ou bâche.

La ligne 5 de liquide sous pression est reliée en parallèle par des branches respectives 5a, 5b, 5c, 5d, munies chacune d'une électrovalve (non représentée) au frein de roue respectif (non représenté). L'alimentation sous pression des freins de roue par les électrovalves est pilotée par un calculateur programmable C.

Le retour du liquide de frein à la bâche 7 est assuré par une ligne 8 à laquelle sont reliées en parallèle des branches 8a, 8b, 8c, 8d, munies chacune d'une électrovalve d'échappement (non représentée) également pilotée par le calculateur C, chaque branche étant associée à un frein de roue.

L'installation comprend un organe de commande manuelle D généralement constitué par une pédale de frein 9, et un maître-cylindre 10 dans lequel peuvent coulisser un piston primaire 11 et un piston secondaire 12 de même section. La pédale 9 est liée au piston 11 par une tige 13 articulée sur la pédale. On désigne par "avance" un déplacement de la pédale 9 vers le maître-cylindre 10, ce qui entraîne un déplacement du piston 11 vers le piston secondaire 12 et le fond opposé 10a du maître-cylindre 10.

Une chambre primaire 14 remplie de liquide est formée entre le piston 11 et le piston 12. Un ressort 14a est disposé dans cette chambre entre les deux pistons. Une chambre secondaire 15, également remplie de liquide, est formée entre le piston 12 et le fond 10a. Un ressort 15a est disposé dans la chambre 15. Les deux chambres 14, 15 du maître-cylindre sont reliées à la bâche 7 pour l'alimentation de ces chambres en liquide.

Un contact électrique 16 sensible à l'avance de la pédale 9 est prévu de manière classique pour commander les feux de "stop". Une borne de ce contact 16 est reliée à une borne du calculateur C, lequel actionne le système de freinage de service A en réponse à l'avance de la pédale 9. Un capteur 17 de la course de la pédale 9 est en outre prévu pour envoyer un signal électrique représentatif du déplacement de la pédale à une autre borne d'entrée du calculateur C. Le capteur 17 permet d'obtenir une information sur l'amplitude du déplacement de la pédale 9 ainsi que sur sa vitesse de déplacement.

La chambre primaire 14 est reliée par une canalisation 18 munie d'une électrovalve 19 de sécurité, ou d'arrêt, à au moins un frein de roue (non représenté). La chambre 15 est reliée par une canalisation 20 munie d'une électrovalve 21 à au moins un autre frein de roue (non représenté) appartenant au même circuit de freinage que le frein de roue précédent. Les électrovalves 19 et 21 sont commandées par le calculateur C qui déclenche leur fermeture lorsque le système de freinage de service A est mis en action.

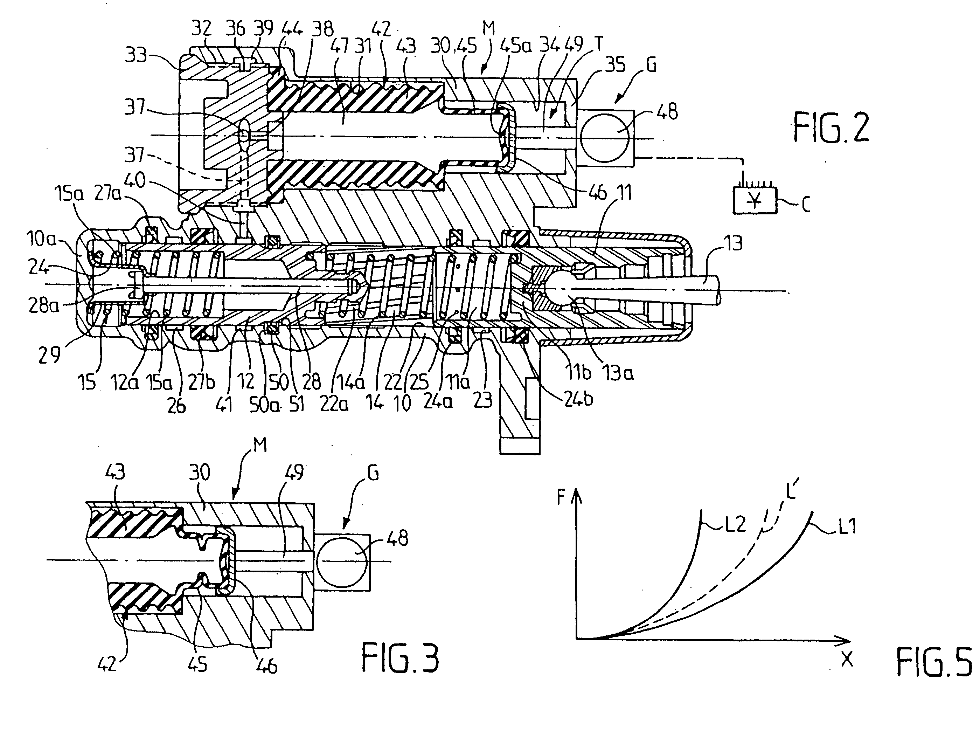

Comme visible sur Fig.2, l'extrémité de la tige 13, éloignée de la pédale 9, est formée par une rotule sphérique 13a maintenue dans un logement prévu dans le piston primaire 11, lequel peut coulisser dans un alésage 22 du maître-cylindre 10. Le piston primaire 11 comporte un logement cylindrique 11a ouvert en direction du piston secondaire 12 et fermé vers l'intérieur par un fond 11b servant d'appui au siège de la rotule 13a. Le logement 11a reçoit une partie du ressort 14a; le fond 11b comporte une saillie cylindrique servant de centrage à l'extrémité du ressort 14a.

Une gorge annulaire 23 est prévue dans l'alésage 22 autour de la paroi du piston 11. Cette gorge 23 est alimentée (de manière non visible) en liquide provenant de la bâche 7. Deux joints à lèvre 24a, 24b sont logés dans des gorges situées de part et d'autre de la gorge 23 et appuient de manière étanche contre la surface extérieure du piston 11. Ce dernier comporte des trous 25, espacés circonférentiellement, dont les centres sont situés dans un plan perpendiculaire à l'axe du piston 11. Ces trous 25 font communiquer le logement 11a avec la surface extérieure du piston 11. Dans la position de repos du piston 11, représentée sur Fig.2, les trous 25 se trouvent du même côté de la lèvre du joint 24a que la gorge 23. Les trous 25 permettent à du liquide de réalimentation provenant de la gorge 23 de pénétrer dans l'alésage 22. Dès que le piston 11 commence à avancer, les trous 25 passent du côté du joint 24a opposé à la gorge 23 et l'alimentation en liquide est coupée.

Une disposition semblable avec gorge 26, alimentée en liquide provenant de la bâche 7, et joints à lèvre 27a, 27b de part et d'autre de la gorge est prévue autour du piston 12 . Le ressort 15a est en appui d'un côté contre le fond 10a du maître-cylindre et, de l'autre côté, contre un épaulement prévu dans un logement 12a du piston 12. Le piston secondaire 12 est retenu, dans sa position de repos illustrée sur Fig.2, à l'encontre de l'action du ressort 15a par une tige 28. L'extrémité arrière de la tige 28 est liée au piston 12 et son extrémité avant 28a forme une tête qui est en butée unilatérale contre le fond d'une cloche 29 fixée au fond 10a. La tête 28a étant écartée du fond 10a, la tige 28 peut coulisser en direction du fond 10a avec le piston 12 qui comprime le ressort 15a.

L'installation de freinage 1 comporte un simulateur M d'actionnement de frein pour opposer à l'avance de la pédale de frein 9 une réaction reflétant le déroulement du freinage. Le simulateur M est représenté de façon symbolique sur Fig.1, et de façon détaillée sur Fig.2.

Le simulateur M comprend un corps 30 qui, dans l'exemple de réalisation donné, est d'une seule pièce avec le corps du maître-cylindre 10. En variante, le corps du simulateur M peut être réalisé sous forme d'une cartouche rapportée, par exemple par vissage, sur le corps du maître-cylindre, ou séparée du maître-cylindre et reliée à ce dernier par une canalisation. Le corps 30 comporte un alésage 31 d'axe parallèle à celui de l'alésage 22 du maître-cylindre. L'alésage 31 débouche, vers l'avant, dans un logement taraudé 32 de plus grand diamètre dans lequel est vissé un bouchon 33. Du côté opposé au bouchon 33 l'alésage 31 est prolongé par un autre alésage 34 coaxial de plus petit diamètre, fermé par un fond 35.

Le bouchon 33 comporte, à sa périphérie, une gorge 36 d'où partent des canaux 37 orientés radialement pour communiquer vers le centre avec un canal axial 38. Ce canal 38 s'ouvre vers l'intérieur de l'alésage 31. Lorsque le bouchon 33 est en position de fermeture et vissé dans le logement 32, la gorge 36 se trouve au droit d'une rainure annulaire 39 prévue dans la paroi intérieure du logement 32 et communiquant avec un canal 40 qui traverse la paroi du maître-cylindre 10 et débouche dans une gorge annulaire 41 entourant le piston 12.

Le simulateur M comprend en outre une membrane 42 en matière élastomère à paroi cylindrique épaisse 43 qui comporte sur sa périphérie des bourrelets pouvant prendre appui contre la surface de l'alésage 31. L'extrémité de la membrane 42 tournée vers le bouchon 33 comporte une collerette 44 qui est serrée de manière étanche par le bouchon 33 contre un épaulement situé au fond du logement 32.

La paroi cylindrique épaisse 43 est prolongée, du côté opposé au bouchon 33, par une partie 45 de plus faible diamètre, sensiblement en forme de coiffe coaxiale, dont la paroi en matière élastomère est plus mince que celle de la partie 43, de manière à pouvoir se replier comme illustré sur Fig.3.

La coiffe 45 est fermée par un fond transversal 45a qui est en appui axial contre une butée 46 sensiblement en forme de cuvette qui peut coulisser axialement dans l'alésage 34. La coiffe 45 et la paroi cylindrique 43 ne forment qu'une seule pièce en matière élastomère, constituant la membrane 42.

La membrane 42 détermine, vers l'intérieur, une chambre 47 dans laquelle débouche le canal 38 qui amène le liquide sous pression provenant du maître-cylindre 10. La paroi de la chambre 47 est constituée principalement par la surface intérieure de partie épaisse 43 qui exerce un rappel élastique radial vers l'intérieur à l'encontre de la pression du liquide dans la chambre 47. La déformation de la coiffe 45 s'effectue plus facilement de sorte que la résistance élastique à l'encontre de la pression de liquide dans la chambre 47 est d'autant plus forte que le volume de la coiffe 45 est plus faible. Ainsi, lorsque la butée 46 s'est déplacée vers le bouchon 33 comme illustré sur Fig.3, le volume intérieur de la coiffe 45 a diminué et la résistance à une augmentation de volume de la chambre 47 est plus forte.

Un moyen G de déplacement de la butée 46 est prévu et comprend un moteur électrique 48, de préférence du type pas à pas. Avantageusement, le moteur 48 est commandé à partir du calculateur C. Ce moteur 48 agit sur un mécanisme T de transformation du mouvement circulaire du moteur en un mouvement rectiligne de la butée 46 suivant l'axe de l'alésage 34.

Le mécanisme T peut comprendre une vis 49 schématiquement représentée disposée suivant l'axe de l'alésage 34 et solidaire de la butée 46 à son extrémité éloignée du moteur 48. La vis 49 traverse le fond 35 contre lequel est fixé le moteur 48 ; la vis 49 est immobilisée en rotation et peut se déplacer axialement. Un écrou (non visible) est entraîné en rotation par le moteur 48 en étant bloqué axialement . En variante, au lieu d'un système vis/écrou, on peut utiliser un système avec pignon entraîné par le moteur 48 et crémaillère coulissante, remplaçant la vis 49.

Chaque pas du moteur 48 permet de placer la butée 46 d'une amplitude déterminée. Fig.2 représente la position extrême de la butée 46 la plus proche du fond 35 tandis que Fig.3 représente la position extrême de la butée 46 la plus éloignée. Des positions intermédiaires sont, bien entendu, possibles entre ces deux positions extrêmes.

L'admission dans la chambre 47 du liquide provenant de la chambre primaire 14 du maître-cylindre 10 est contrôlée par un moyen de valve faisant intervenir le piston secondaire 12 d'une manière semblable à celle décrite dans FR 2 772 706. On rappelle que lorsque le système de freinage de service à énergie extérieure fonctionne normalement, la chambre secondaire 15 est fermée par l'électrovalve 21 (Fig.1) et le liquide contenu dans cette chambre 15 est emprisonné. Le piston secondaire 12 est ainsi bloqué contre tout déplacement sensible en direction du fond 10a du maître-cylindre.

Le moyen de valve comprend un joint torique 50 (Fig.4) disposé dans une gorge annulaire 50a prévue dans l'alésage 22 du maître-cylindre, du côté de la gorge 41 opposé au fond 10a. Une gorge 51 annulaire est prévue à la périphérie du piston secondaire 12 de manière à se trouver en face du joint 50 lorsque le piston 12 est en position de repos comme illustré sur Figs.2 et 4. La gorge 51a une dimension axiale suffisante pour faire communiquer les parties de l'alésage 22 situées de part et d'autre du joint 50. Pour permettre au liquide de s'écouler entre la surface extérieure des pistons 11, 12 et la surface intérieure de l'alésage 22, ce dernier comporte des rainures hélicoïdales 22a qui s'étendent du joint 24a jusqu'à la gorge 41, en étant interrompues par la gorge 50a.

Dans la position illustrée sur Fig.2, en supposant que l'électrovalve 21 est fermée, et donc la chambre secondaire 15, lorsque le piston primaire 11 est déplacé en direction du fond 10a, le piston 12 reste immobile; la chambre primaire 14 diminue de volume et du liquide est refoulé par le piston 11. Ce liquide peut s'écouler par les rainures 22a, passer par la gorge 51 au-dessous du joint 50 et parvenir à la gorge 41 pour ensuite arriver dans la chambre 47 dont la paroi élastique 43 exerce un effort antagoniste à l'encontre de la pression du liquide et d'une augmentation de volume.

Par contre, lorsque le système de freinage de secours B est mis en service, l'électrovalve 21 est ouverte (Fig.1). Un déplacement du piston primaire 11 vers le fond 10a va provoquer directement un déplacement du piston secondaire 12 vers le fond 10a. Le joint torique 50 va venir s'appuyer de manière étanche contre la surface extérieure du piston 12 qui a avancé. Le simulateur M est alors isolé du maître-cylindre et le liquide de la chambre primaire et de la chambre secondaire du maître-cylindre peut être utilisé pour le freinage de secours.

Ceci étant, le fonctionnement de l'installation de freinage selon l'invention est le suivant.

Pour des conditions normales, le système de freinage de service A à énergie extérieure assure le freinage. Lorsque le conducteur appuie sur la pédale de frein 9, les électrovalves 19 et 21 se ferment. Comme déjà expliqué, le liquide de la chambre secondaire 15 ne peut s'écouler et bloque le piston secondaire 12. Le liquide de la chambre primaire 14 s'écoule, lors de l'avance du piston primaire 11, dans la chambre 47 du simulateur M.

Lorsque la butée 46 occupe la position de Fig.2, la membrane 43 et la coiffe 45 vont opposer une résistance élastique relativement faible à l'encontre de l'augmentation de volume de la chambre 47. La pression dans la chambre primaire 14 et la force F sur le piston primaire 11 vont augmenter relativement lentement en fonction de la course axiale X du piston primaire 11. La loi de variation est représentée par la courbe L1 de Fig.5.

Par contre, lorsque la butée 46 est déplacée dans la position illustrée sur Fig.3, la résistance élastique de la membrane 42 à l'augmentation de volume de la chambre 47 est plus forte et la loi de variation de l'effort F sur la pédale 9 en fonction de la course X sera plus rapide, comme illustré par la courbe L2 de Fig.5. Il est bien entendu possible d'obtenir des lois de variation telles que L' situées entre L1 et L2 avec des positions intermédiaires de la butée 46.

Il est ainsi possible de créer une sensation pédale spécifique au type de conduite par déplacement de la butée 46 afin de modifier la loi effort F / course X.

Un seul groupe maître-cylindre / simulateur de pression peut convenir aux différents constructeurs et aux différents véhicules ; il suffit de programmer la position de la butée 46 en conséquence.

La solution proposée permet de conserver la sensation pédale quelle que soit la température en modifiant en conséquence la position de la butée 46. De même il est possible de rattraper des variations de dureté du caoutchouc de la membrane 42, ou des variations de viscosité du liquide de frein. L'usure des pièces peut être compensée ce qui permet de conserver dans le temps la sensation pédale.

Cette sensation pédale peut aussi être conservée quel que soit le niveau de purge du liquide de freins.

Dans le cas où le système de freinage de secours B est mis en service les électrovalves 19 et 21 sont ouvertes et le simulateur de pression M n'intervient plus.

## Revendications

1. Simulateur de sensation de freinage, pour une installation de freinage, propre à opposer à l'avance d' un organe de commande manuelle une réaction reflétant le déroulement d'un freinage, ce simulateur comprenant un corps (30) avec une chambre (47) pour recevoir le liquide sous pression provenant d'un maître-cylindre (10) , le volume de cette chambre (47) étant variable et délimité par une paroi mobile (43, 45) sollicitée par un moyen de rappel élastique, la chambre ayant un fond (45a) en appui contre une butée (46), ladite paroi mobile étant formée par une membrane déformable (42) **caractérisée par le fait qu'**il comporte un moyen (G) pour modifier la position de la butée (46) et pour ainsi modifier la loi de variation (L1,L2, L') de la force (F) en fonction de la course (X) de l'organe de commande manuelle (D) et en ce que ladite butée (46) coopère avec la membrane déformable.

2. Simulateur de sensation freinage selon la revendication 1, **caractérisée par le fait que** le moyen (G) pour modifier la position de la butée (46) est un moyen de déplacement axial de la butée.

3. Simulateur de sensation de freinage selon la revendication 1 ou 2, **caractérisée par le fait que** le moyen (G) pour modifier la position de la butée (46) comprend un moteur électrique (48) qui entraîne un mécanisme (T) de transformation du mouvement circulaire en un mouvement rectiligne de la butée (46).

4. Simulateur de sensation de freinage selon la revendication 3, **caractérisée par le fait que** le moteur électrique (48) est du type pas à pas.

5. Simulateur de sensation de freinage selon la revendication 3 ou 4, **caractérisée par le fait que** le mécanisme (T) de transformation du mouvement comprend un système vis-écrou ou un système pignon-crémaillère.

6. Simulateur de sensation de freinage selon l'une des revendications 1 à 5 **caractérisé par le fait que** la membrane est en matière élastomère, ou équivalent, à paroi cylindrique relativement épaisse avec une coiffe d'extrémité (45) à paroi moins épaisse, déformable suivant la direction axiale, dont le fond (45a) est en appui contre la butée (46).

7. Installation de freinage hydraulique pour véhicule comportant, pour actionner des freins de roue :
- un système de freinage de service (A) à énergie extérieure ;
- un système de freinage de secours (B) à énergie musculaire ;
- un organe de commande manuelle (D) dont l'avance actionne le système de freinage de service ou, en cas de défaillance de ce dernier, le freinage de secours ;
- un maître-cylindre (10) avec au moins un piston primaire (11) dont le déplacement est assuré par l'organe de commande manuelle ;
- au moins une valve de sécurité (19, 21) permettant soit d'isoler le maître-cylindre des freins de roue lorsque le freinage de service fonctionne normalement, soit, en cas de défaillance du freinage de service, d'utiliser le maître-cylindre pour un freinage de secours ;
- un simulateur de sensation de freinage (M) pour opposer à l'avance de l'organe de commande manuelle, lors d'un freinage de service à énergie extérieure, une réaction reflétant le déroulement du freinage,
**caractérisé en ce que** le simulateur est un simulateur selon l'une quelconque des revendications 1 à 6.

8. Installation de freinage selon la revendication 7, **caractérisée par le fait que** le corps (30) du simulateur est disposé avec son axe parallèle à celui du maître-cylindre (10) et est solidaire du corps du maître-cylindre, la communication entre le maître-cylindre et la chambre étant assurée par une canalisation (40) prévue dans le corps, reliée à une gorge annulaire (39) qui communique avec des canaux (37) orientés radialement débouchant dans une ouverture centrale qui communique avec la chambre (47) du simulateur.

## Patentansprüche

1. Bremsgefühlsimulator für eine Bremsanlage, der dazu geeignet ist, dem Vorschieben eines manuellen Steuerorgans eine Reaktion entgegen zu setzen, welche den Ablauf einer Bremsung reflektiert, wobei dieser Simulator einen Körper (30) mit einer Kammer (47) aufweist, um die unter Druck stehende Flüssigkeit von einem Hauptzylinder (10) aufzunehmen, wobei das Volumen dieser Kammer (47) variabel ist und durch eine bewegliche Wand (43, 45) begrenzt wird, welche von einem elastischen Rückstellmittel beaufschlagt wird, wobei die Kammer einen Boden (45a) besitzt, der sich gegen einen Anschlag (46) stützt, wobei die bewegliche Wand von einer verformbaren Membran (42) gebildet wird, **dadurch gekennzeichnet, dass** er ein Mittel (G) zur Änderung der Lage des Anschlags (46) besitzt, um somit das Gesetz (L1, L2, L') der Veränderung der Kraft (F) in Abhängigkeit von dem Weg (X) des manuellen Steuerorgans (D) zu ändern, und dass der Anschlag (46) mit der verformbaren Membran zusammenwirkt.

2. Bremsgefühlsimulator nach Anspruch 1, **dadurch gekennzeichnet, dass** das Mittel (G) zur Änderung der Lage des Anschlags (46) ein Mittel zur axialen Verlagerung des Anschlags ist.

3. Bremsgefühlsimulator nach Anspruch 1 oder 2, **dadurch gekennzeichnet, dass** das Mittel (G) zur Änderung der Lage des Anschlags (46) einen Elektromotor (48) aufweist, welcher einen Mechanismus (T) zur Umwandlung der kreisförmigen Bewegung in eine geradlinige Bewegung des Anschlags (46) antreibt.

4. Bremsgefühlsimulator nach Anspruch 3, **dadurch gekennzeichnet, dass** der Elektromotor (48) vom Typ Schrittmotor ist.

5. Bremsgefühlsimulator nach Anspruch 3 oder 4, **dadurch gekennzeichnet, dass** der Mechanismus (T) zur Umwandlung der Bewegung ein System Schraube-Mutter oder ein System Zahnritzel-Zahnstange aufweist.

6. Bremsgefühlsimulator nach einem der Ansprüche 1 bis 5, **dadurch gekennzeichnet, dass** die Membran aus elastomerem oder gleichwertigem Material hergestellt ist, eine relativ dicke zylindrische Wand mit einer Endkappe (45) besitzt, welche eine dünnere Wand besitzt, entlang der axialen Richtung verformbar ist und deren Boden (45a) sich gegen den Anschlag (46) stützt.

7. Hydraulische Bremsanlage für ein Kraftfahrzeug, die zur Betätigung von Radbremsen aufweist:
- ein Betriebsbremssystem (A) mit externer Energie;
- ein Hilfsbremssystem (B) mit Muskelenergie;
- ein manuelles Steuerorgan (D), dessen Vorschieben das Betriebsbremssystem oder, falls dieses ausfällt, das Hilfsbremssystem in Betrieb setzt;
- einen Hauptzylinder (10) mit mindestens einem Primärkolben (11), dessen Verlagerung durch das manuelle Steuerorgan gewährleistet wird;
- mindestens ein Sicherheitsventil (19, 21), das es entweder ermöglicht, den Hauptzylinder von den Radbremsen zu isolieren, wenn die Betriebsbremsung normal funktioniert, oder beim Ausfall der Betriebsbremsung, den Hauptzylinder für eine Hilfsbremsung zu benutzen;
- einen Bremsgefühlsimulator (M), um dem Vorschieben des manuellen Steuerorgans bei einer Betriebsbremsung mit externer Energie eine Reaktion entgegen zu setzen, welche den Ablauf der Bremsung reflektiert,
**dadurch gekennzeichnet, dass** der Simulator ein Simulator gemäß einem der Ansprüche 1 bis 6 ist.

8. Bremsanlage nach Anspruch 7, **dadurch gekennzeichnet, dass** der Körper (30) des Simulators so angeordnet ist, dass seine Achse parallel zur Achse des Hauptzylinders (10) liegt und er fest mit dem Körper des Hauptzylinders verbunden ist, wobei die Verbindung zwischen dem Hauptzylinder und der Kammer durch eine Leitung (40) gewährleistet wird, welche im Körper vorgesehen, an eine ringförmige Nut (39) angeschlossen ist, die mit Kanälen (37) verbunden ist, welche radial ausgerichtet sind und in eine mittlere Öffnung münden, die mit der Kammer (47) des Simulators verbunden ist.

## Claims

1. Brake feel simulator for a braking installation, able to oppose the advance of a manual control member with a reaction reflecting the way the braking is progressing, this simulator comprising a body (30) with a chamber (47) to receive the pressurized fluid from a master cylinder (10), the volume of this chamber (47) being variable and defined by a moving wall (43, 45) urged by an elastic return means, the chamber having an end wall (45a) resting against the stop (46), the said moving wall being formed by a deformable membrane (42), **characterized in that** it comprises a means (G) for modifying the position of the stop (46) and for thus modifying the law (L1, L2, L') governing the variation in force (F) as a function of the travel (X) of the manual control member (D), and **in that** the said stop (46) collaborates with the deformable membrane.

2. Brake feel simulator according to Claim 1, **characterized in that** the means (G) for modifying the position of the stop (46) is a means for moving the stop axially.

3. Brake feel simulator according to Claim 1 or 2, **characterized in that** the means (G) for modifying the position of the stop (46) comprises an electric motor (48) which drives a mechanism (T) for converting the circular movement into a rectilinear movement of the stop (46).

4. Brake feel simulator according to Claim 3, **characterized in that** the electric motor (48) is of the stepping type.

5. Brake feel simulator according to Claim 3 or 4, **characterized in that** the movement-converting mechanism .(T) comprises a screw-nut system or a rack-and-pinion system.

6. Brake feel simulator according to one of Claims 1 to 5, **characterized in that** the membrane is made of elastomeric material (or equivalent) with a relatively thick cylindrical wall and an end cap (45) with a thinner wall, deformable in the axial direction, the end wall (45a) of which rests against the stop (46).

7. Hydraulic braking installation for a vehicle comprising, to actuate the wheel brakes:
- an externally powered service braking system (A);
- a muscle-powered emergency braking system (B);
- a manual control member (D) the advance of which actuates the service braking system or, should the latter fail, the emergency braking;
- a master cylinder (10) with at least one primary piston (11) the movement of which is afforded by the manual control member;
- at least one safety valve (19, 21) making it possible either to isolate the master cylinder from the wheel brakes when the service braking is operating normally, or, should the service braking fail, to use the master cylinder for emergency braking;
- a brake feel simulator (M) to oppose the advance of the manual control member, during externally powered service braking, in the form of a reaction reflecting the way the braking is progressing,
**characterized in that** the simulator is a simulator according to any one of Claims 1 to 6.

8. Braking installation according to Claim. 7, **characterized in that** the body (30) of the simulator is arranged with its axis parallel to that of the master cylinder (10) and is secured to the body of the master cylinder, the communication between the master cylinder and the chamber being afforded by a duct (40) provided in the body, connected to an annular groove (39) that communicates with radially directed passages (37) opening into a central opening that communicates with the chamber (47) of the simulator.
